# EUROPÄISCHE PATENTSCHRIFT

(11) **EP 1 772 947 B1**
(45) Veröffentlichungstag und Bekanntmachung des Hinweises auf die Patenterteilung: **06.11.2013**
(21) Anmeldenummer: 06019119.4
(22) Anmeldetag: 13.09.2006
(51) Int. Cl.: B60K 17/04, B60K 7/00, H02K 7/116, H02K 11/00

(54) **Antrieb für ein Mobilfahrzeug**
Drive unit for a mobile vehicle
Mécanisme d'entraînement pour véhicule mobile

(30) Priorität: 06.10.2005 DE 102005047953
(43) Veröffentlichungstag der Anmeldung: 11.04.2007
(73) Patentinhaber: ZF Friedrichshafen AG, 88038 Friedrichshafen (DE)
(72) Erfinder: Streipardt, Peter, 99880 Waltershausen (DE); Bald, Dirk, 99867 Gotha (DE); Heinrich, Kai, 88285 Bodnegg (DE)

(56) Entgegenhaltungen:
- DE-C1- 4 010 742
- GB-A- 2 220 178
- JP-A- 2001 173 761

## Beschreibung

Die Erfindung betrifft einen Antrieb für ein Mobilfahrzeug nach der im Oberbegriff von Anspruch 1 näher definierten Art.

Gattungsgemäße Antriebe bestehen aus einem Elektromotor, welcher über mindestens ein Untersetzungsgetriebe ein Antriebsrad antreibt, wobei die Drehzahl der elektrischen Antriebsmaschine häufig als Eingangsgröße einer Geschwindigkeitsregelung verwendet wird. Bei elektrischen Drehfeldmaschinen ist eine genaue Kenntnis der Rotorgeschwindigkeit notwendig, um eine feinfühlige Regelung zu ermöglichen. Häufig werden bei Drehfeldmaschinen Sensorlager verwendet, welche die Drehzahl des Rotors ausgeben, wobei bei einem Defekt dieses Sensorlagers der komplette Antrieb demontiert werden muß.

Die DE 40 10 742 C1 offenbart einen gattungsgemäßen Antrieb eines Flurförderzeuges, bei welchem ein Elektromotor über ein Stirnradgetriebe und ein Planetengetriebe ein Antriebsrad antreibt, und das Antriebsrad über eine Bremse bremsbar ist.

Die GB 2 220 178 A offenbart einen elektrischen Antriebsmotor, welcher über ein Untersetzungsgetriebe ein Rad antreibt, wobei ein Drehzahlsensor mittelbar die Drehzahl des Antriebsmotors erfasst.

Der vorliegenden Erfindung liegt die Aufgabe zugrunde, einen Antrieb für ein Mobilfahrzeug, insbesondere ein Flurförderzeug, zu schaffen, bei welchem ein Elektromotor über ein Untersetzungsgetriebe ein Antriebsrad antreibt, der Antrieb eine feinfühlige Drehzahlregelung, und somit Geschwindigkeitsregelung, aufweist, und der Antrieb, insbesondere in seiner Baulänge, kompakt ausgeführt ist.

Die Aufgabe wird mit einem, auch die kennzeichnenden Merkmale des Hauptanspruchs aufweisenden, gattungsgemäßen Antrieb für ein Mobilfahrzeug gelöst.

Erfindungsgemäß weist der Antrieb einen elektrischen Antriebsmotor auf, welcher über mindestens ein Untersetzungsgetriebe ein Fahrzeugrad antreibt, wobei die Drehachse des Antriebsmotors beabstandet zur Drehachse des Fahrzeugrades angeordnet ist. Der Antrieb weist einen Drehzahlsensor auf, welcher das Gehäuse des Antriebs durchdringt und mit einem drehenden Bauteil des Antriebs so in Wirkverbindung steht, dass der Sensor die Drehzahl der Antriebsmotorwelle oder eines mit dieser in konstantem Drehzahlverhältnis stehenden Bauteils ausgibt. Da der Drehzahlsensor das Gehäuse, in welchem das Untersetzungsgetriebe angeordnet ist, durchdringt, kann er auf einfache Weise bei einem Defekt ausgetauscht werden, ohne den Antrieb demontieren zu müssen. Insbesondere bei Flurförderzeugen ist es notwendig, den Antrieb eingebaut im Fahrzeug zu belassen und dennoch den Drehzahlsensor austauschen zu können. Der Drehzahlsensor ist deshalb entweder im Bereich der Verlängerung der Drehachse der Antriebswelle des Elektromotors, bezogen auf das Antriebsritzel, auf der gegenüberliegenden Seite des Elektromotors oder im radial am Umfang des abtreibenden Stirnrades eines Stirnradgetriebes angeordnet, wobei die Antriebswelle des Elektromotors das este Stirnrad antreibt. Dadurch besteht die Möglichkeit, den Drehzahlsensoren auch bei im Fahrzeug eingebauten Antrieb austauschen zu können.

In einer weiteren Ausgestaltungsform der Erfindung treibt die Antriebsmotorwelle ein erstes Stirnrad an, an dessen axialer Fläche, welche sich an der dem Antriebsmotor abgewandten Seite befindet, ein Di-Pol angeordnet ist, welcher mit einem Sinus-Cosinus-Lagesensor in Wirkverbindung steht, welcher in der Verlängerung der Drehachse des Antriebsmotors angeordnet ist. Dieser Sensor gibt Drehzahlsignale aus, welche direkt die Drehzahl der Antriebsmotorwelle wiedergeben. Bei einer inkrementellen Drehzahlerfassung werden mindestens 64 Impulse pro Rotorumdrehung ausgegeben. Häufig liegt die Anzahl der Impulse höher. Der Sinus-Cosinus-Lagesensor erfaßt die "Lage", also die aktuelle Winkelstellung des Rotors. Eine Drehzahl wird aus der Lage generiert.

Bei einer weiteren Ausgestaltungsform der Erfindung treibt der Antriebsmotor ein erstes Stirnrad einer Untersetzungsgetriebestufe an, welches ein weiteres Stirnrad antreibt, dessen Verzahnung mit einem Drehzahlsensor in Wirkverbindung steht. Dieser Drehzahlsensor ist entweder im axialen Bereich oder im radialen Bereich am Umfang des weiteren Stirnrades benachbart zur Verzahnung angeordnet, um Impulse, welche die Drehzahl des weiteren Stirnrades widerspiegeln, auszugeben. Eine elektronische Steuereinheit ermittelt, ausgehend vom Untersetzungsgetriebeverhältnis des ersten und zweiten Stirnrades sowie den Impulsen des Sensors, die Drehzahl der Elektromotorwelle.

In einer weiteren Ausgestaltungsform der Erfindung treibt die Welle des elektrischen Antriebsmotors ein erstes Stirnrad an, welches ein weiteres Stirnrad antreibt. Ein Geberrad ist drehfest mit dem weiteren Stirnrad verbunden und steht in Wirkverbindung mit einem axial zu diesem angeordneten Drehzahlsensor. Die Drehzahlsensoren, welche mit dem weiteren Stirnrad oder dem Geberrad in Wirkverbindung stehen, durchdringen das Getriebegehäuse und können teilweise aus dem Getriebegehäuse ragen. Hierdurch besteht die Möglichkeit, bei einem Defekt des Sensors diesen auf einfache Weise zu demontieren. Ist der Sensor im Bereich der Aufstandsfläche des Fahrzeugrades angeordnet, so besteht die Möglichkeit, das Getriebegehäuse so auszubilden, dass der Drehzahlsensor vor Beschädigungen geschützt ist. Hierzu besteht die Möglichkeit, Gußrippen im Bereich des Drehzahlsensors anzuordnen.

Weitere Merkmale sind der Figuren-Beschreibung zu entnehmen.

Es zeigen:

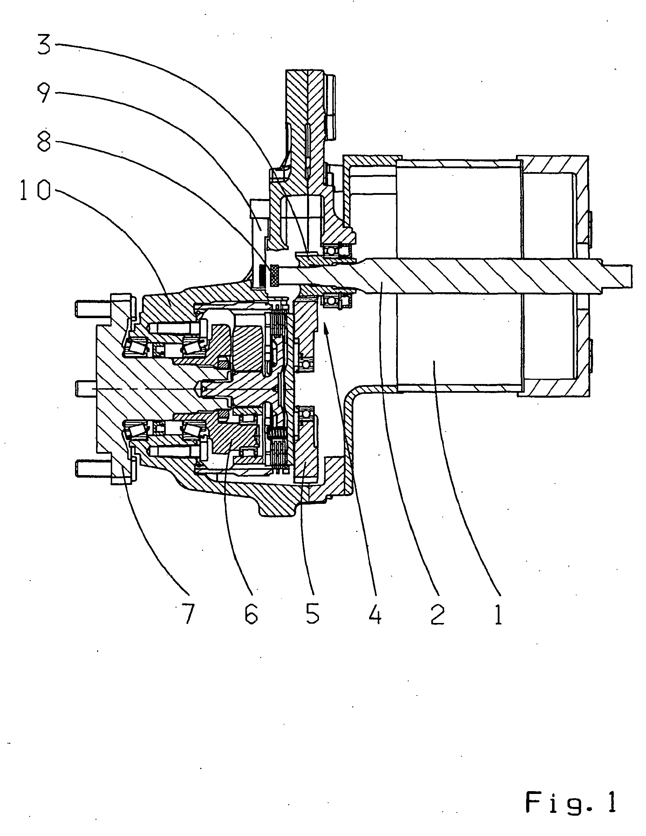

- Fig. 1: einen Antrieb mit einem Di-Pol und Sinus-Cosinus-Lagesensor;

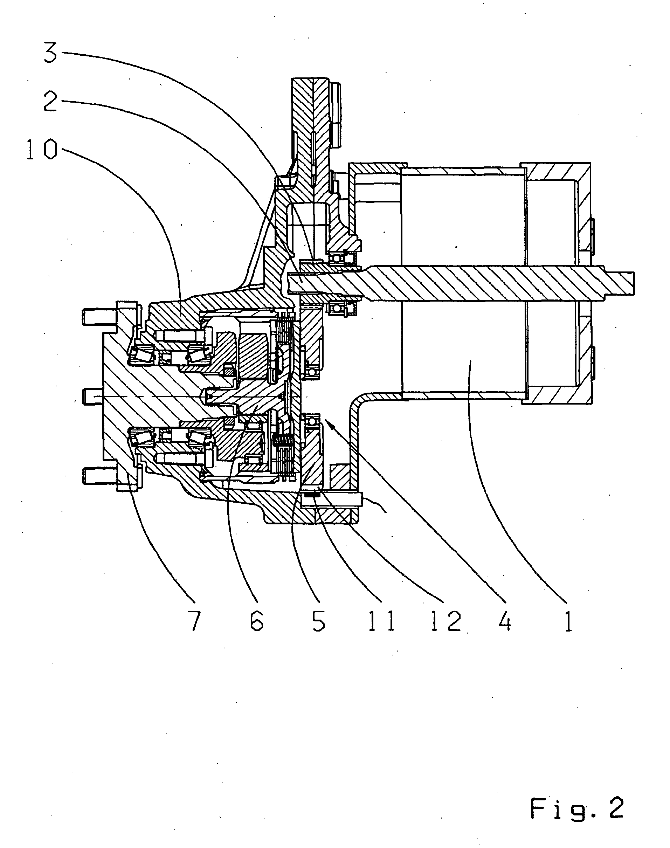

- Fig. 2: einen Antrieb mit einem radial zum weiteren Stirnrad angeordneten Drehzahlsensor;

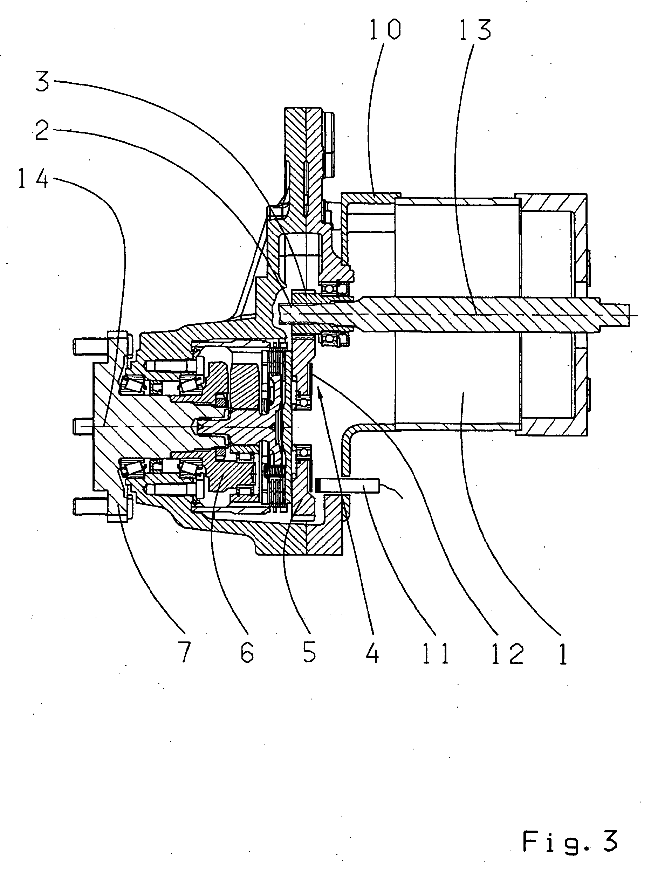

- Fig. 3: einen Antrieb mit dem weiteren Stirnrad verbundenen Geberrad und einem Drehzahlsensor und

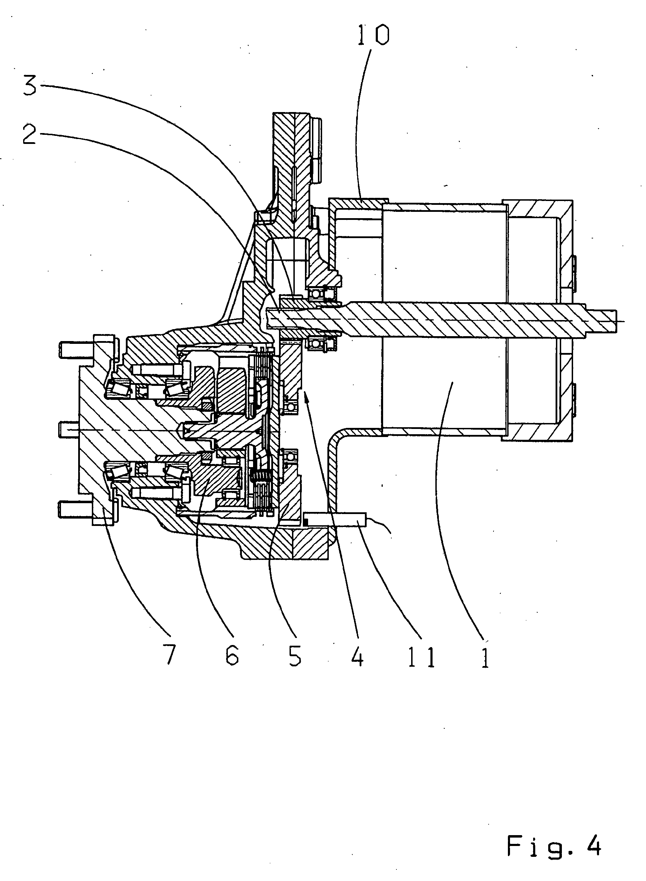

- Fig. 4: einen axial zum weiteren Stirnrad angeordneten Drehzahlsensor.

### Fig. 1:

Ein elektrischer Antriebsmotor 1 treibt mit seiner Welle 2 ein erstes Stirnrad 3 eines Stirnradgetriebes 4 an. Das erste Stirnrad 3 treibt ein weiteres Stirnrad 5 an, welches über ein Planetengetriebe 6 eine Nabe 7 antreibt, welche ein nicht gezeigtes Antriebsrad antreibt. Ein Di-Pol 8 steht mit dem ersten Stirnrad 3 in Wirkverbindung bzw. ist mit diesem drehfest verbunden. Bei Drehung der Welle 2 dreht sich der Di-Pol 8 und der Sinus-Cosinus-Lagesensor 9 gibt Signale in Abhängigkeit der Drehzahl der Welle 2 aus. Der Sinus-Cosinus-Lagesensor 9 durchdringt das Gehäuse 10 und ist auf der dem elektrischen Antriebsmotor 1 abgewandten Seite des Gehäuses 10 angeordnet. Der Sinus-Cosinus-Lagesensor 9 ragt teilweise aus dem Gehäuse 10 heraus, welches einen Austausch des Sensors 9 ermöglicht.

### Fig. 2:

Ein elektrischer Antriebsmotor 1 treibt mit seiner Welle 2 ein erstes Stirnrad 3 eines Stirnradgetriebes 4 an. Das erste Stirnrad 3 treibt ein weiteres Stirnrad 5 an, welches über ein Planetengetriebe 6 die Nabe 7 antreibt. Am radialen Umfang des weiteren Stirnrades 5 ist ein Drehzahlsensor 11 angeordnet, welcher im Bereich der Verzahnung 12, bei Drehung des weiteren Stirnrades 5, Drehzahlimpulse ausgibt. Der Drehzahlsensor 11 durchdringt das Gehäuse 10 und ist radial zum weiteren Stirnrad 5 angeordnet. Ein Teil des Drehzahlsensors 11 ragt aus dem Gehäuse 10, wodurch eine Demontage des Sensors 1 ermöglicht wird.

### Fig. 3:

Ein elektrischer Antriebsmotor 1 treibt über seine Welle 2 ein erstes Stirnrad 3 und dieses ein weiteres Stirnrad 5 an. Ein Geberrad 12 ist drehfest mit dem weiteren Stirnrad 5 verbunden. Ein Drehzahlsensor 11 ist axial benachbart zum Geberrad 12 angeordnet und gibt in Abhängigkeit der Drehzahl des weiteren Stirnrades 5 Drehzahlimpulse aus. Der Drehzahlsensor 11 durchdringt das Gehäuse 10 und ist beabstandet zur Drehachse 13 und Drehachse 14 angeordnet. Es besteht die Möglichkeit, das Gehäuse 10 so auszubilden, dass Gehäuserippen den Drehzahlsensor 11 vor Beschädigung schützen.

### Fig. 4:

Ein elektrischer Antriebsmotor 11 treibt über seine Welle 2 ein erstes Stirnrad 3 und dieses ein weiteres Stirnrad 5 an. Benachbart zur Verzahnung des weiteren Stirnrades 5 ist axial ein Drehzahlsensor 11 angeordnet, welcher das Gehäuse 10 durchdringt und somit auf einfache Art bei einem Defekt ausgetauscht werden kann.

### Bezugszeichen

- 1: elektrischer Antriebsmotor
- 2: Welle
- 3: erstes Stirnrad
- 4: Stirnradgetriebe
- 5: weiteres Stirnrad
- 6: Planetengetriebe
- 7: Nabe
- 8: Di-Pol
- 9: Sinus-Cosinus-Lagesensor
- 10: Gehäuse
- 11: Drehzahlsensor
- 12.: Geberrad
- 13: Drehachse
- 14: Drehachse

## Patentansprüche

1. Flurförderzeugantrieb mit einem elektrischen Antriebsmotor (1) mit einer um ihre Drehachse (13) drehbare Antriebswelle (2), welcher über mindestens ein Untersetzungsgetriebe ein um seine Drehachse (14) drehbares Fahrzeugrad antreibt, wobei das Untersetzungsgetriebe in einem Untersetzungsgetriebegehäuses (10) angeordnet ist, mit einem Drehzahlsensor (9, 11), wobei drehende Bauteile (2, 5) mit diesem Drehzahlsensor (9, 11) in Wirkverbindung stehen, so dass der Drehzahlsensor (9, 11) Drehzahlsignale ausgibt, welche in Abhängigkeit der Drehzahl des Antriebsmotors (1) stehen, wobei der Drehzahlsensor (9,11) ohne eine Demontage des Antriebs austauschbar ist, wobei die Drehachse (13) des elektrischen Antriebsmotors (1) beabstandet zur Drehachse (14) des Fahrzeugrades angeordnet ist, wobei das Untersetzungsgetriebe ein Stirnradgetriebe (4) und ein Planetengetriebe (6) aufweist, und die Antriebswelle (2) über ein antreibendes Stirnrad (3) und ein abtreibendes Stirnrad (5) des Stirnradgetriebes (4) und über das Planetengetriebe (6) das Fahrzeugrad antreibt, wobei der Drehzahlsensor (9, 11) teilweise aus dem Untersetzungsgetriebegehäuse (10) ragt und der Drehzahlsensor (9, 11) entweder axial in der Verlängerung der Drehachse (13) der Antriebswelle (2) des elektrischen Antriebsmotors (1), bezogen auf das antreibende Stirnrad (3), auf der gegenüberliegenden Seite zum elektrischen Antriebsmotor (1) im Bereich des abtreibenden Stirnrades (5) angeordnet ist und die Drehzahl der Antriebswelle (2) detektiert, oder radial am Umfang des abtreibenden Stimrades (5) angeordnet ist und die Drehzahl des abtreibenden Stirnrades (5) detektiert oder axial im Bereich der Verzahnung des abtreibenden Stirnrades (5) angeordnet ist und die Drehzahl des abtreibenden Stirnrades (5) detektiert.

2. Antrieb für ein Mobilfahrzeug nach Anspruch 1, **dadurch gekennzeichnet, dass** der Drehzahlsensor (9), welcher axial in der Verlängerung der Drehachse der Antriebswelle angeordnet ist, ein Sinus-Cosinus-Lagesensor (9) ist, welcher mit einem magnetischen Di-Pol (8) zusammenwirkt, welcher mit dem antreibenden Stirnrad (3) an seiner dem Antriebsmotor (1) abgewandten axialen Fläche verbunden ist.

3. Antrieb für ein Mobilfahrzeug nach Anspruch 1, dadurch **gekenn-zeichnet**, dass der aus dem Untersetzungsgetriebegehäuse (10) ragende Teil des Sensors (9, 11), zumindest in Richtung Fahrzeugradaufstandsfläche, durch Gußrippen des Untersetzungsgetriebegehäuses (10) geschützt ist.

4. Antrieb für ein Mobilfahrzeug nach Anspruch 1, dadurch **gekenn-zeichnet**, dass das abtreibende Stirnrad (5) drehfest mit einem koaxial zum abtreibenden Stirnrad (5) angeordneten Geberrad (12) verbunden ist, und der Drehzahlsensor (11) senkrechtzum Geberrad (12) angeordnet ist und so mit diesem Geberrad (12) zusammenwirkt, dass er Drehzahlsignale der Drehzahl des abtreibenden Stirnrades (5) ausgibt.

5. Antrieb für ein Mobilfahrzeug nach Anspruch 1 dadurch **ge-kennzeichnet**, dass der mit dem Geberrad (12) zusammenwirkende Drehzahlsensor (11) parallel zur Drehachse (14) des Geberrades (12) ange-ordnet ist.

## Claims

1. Industrial truck drive having an electric drive motor (1) with a drive shaft (2) which can rotate about its rotation axis (13) and which drives a vehicle wheel, which can rotate about its rotation axis (14), by means of at least one step-down gear mechanism, wherein the step-down gear mechanism is arranged in a step-down gear mechanism housing (10), having a rotation speed sensor (9, 11), wherein rotating components (2, 5) are operatively connected to the said rotation speed sensor (9, 11), with the result that the rotation speed sensor (9, 11) outputs rotation speed signals which depend on the rotation speed of the drive motor (1), wherein the rotation speed sensor (9, 11) can be replaced without disassembling the drive, wherein the rotation axis (13) of the electric drive motor (1) is arranged at a distance from the rotation axis (14) of the vehicle wheel, wherein the step-down gear mechanism has a spur gear mechanism (4) and a planetary gear mechanism (6), and the drive shaft (2) drives the vehicle wheel by means of a driving spur gear (3) and an output-drive spur gear (5) of the spur gear mechanism (4) and by means of the planetary gear mechanism (6), wherein the rotation speed sensor (9, 11) projects partially out of the step-down gear mechanism housing (10) and the rotation speed sensor (9, 11) is arranged either axially in the extension of the rotation axis (13) of the drive shaft (2) of the electric drive motor (1), in relation to the driving spur gear (3), on the opposite side to the electric drive motor (1) in the region of the output-drive spur gear (5) and detects the rotation speed of the drive shaft (2), or is arranged radially on the circumference of the output-drive spur gear (5) and detects the rotation speed of the output-drive spur gear (5), or is arranged axially in the region of the tooth system of the output-drive spur gear (5) and detects the rotation speed of the output-drive spur gear (5).

2. Drive for a mobile vehicle according to Claim 1, **characterized in that** the rotation speed sensor (9), which is arranged axially in the extension of the rotation axis of the drive shaft, is a sine/cosine position sensor (9) which interacts with a magnetic dipole (8) which is connected to the driving spur gear (3) at its axial face which is averted from the drive motor (1).

3. Drive for a mobile vehicle according to Claim 1, **characterized in that** the portion of the sensor (9, 11) which projects out of the step-down gear mechanism housing (10) is protected at least in the direction of the area on which the vehicle wheel is standing by cast ribs of the step-down gear mechanism housing (10).

4. Drive for a mobile vehicle according to Claim 1, **characterized in that** the output-drive spur gear (5) is connected in a rotationally fixed manner to a transmitter wheel (12) which is arranged coaxially to the output-drive spur gear (5), and the rotation speed sensor (11) is arranged perpendicular to the transmitter wheel (12) and interacts with the said transmitter wheel (12) such that it outputs rotation speed signals relating to the rotation speed of the output-drive spur gear (5).

5. Drive for a mobile vehicle according to Claim 1, **characterized in that** the rotation speed sensor (11) which interacts with the transmitter wheel (12) is arranged parallel to the rotation axis (14) of the transmitter wheel (12).

## Revendications

1. Mécanisme d'entraînement de chariot élévateur doté d'un moteur électrique d'entraînement en entrée (1) pourvu d'un arbre d'entraînement en entrée (2) pouvant pivoter autour de son axe de rotation (13) entraîné en entrée par le biais d'une roue de véhicule pouvant tourner autour de son axe de rotation (14), le démultiplicateur de vitesses étant disposé dans un carter de démultiplicateur de vitesses (10), avec un capteur de vitesse de rotation (9, 11), les composants (2, 5) tournants étant reliés à ce capteur de vitesse de rotation (9, 11), de sorte que le capteur de vitesse de rotation (9, 11) envoie des signaux de vitesse de rotation dépendant de la vitesse de rotation du moteur d'entraînement en entrée (1), le capteur de vitesse de rotation (9, 11) pouvant être remplacé sans démontage de l'entraînement en entrée, l'axe de rotation (13) du moteur électrique d'entraînement en entrée (1) étant disposé à l'écart de l'axe de rotation (14) de la roue de véhicule, le démultiplicateur de vitesses comportant un engrenage de roue dentée droite (4) et un engrenage planétaire (6) et l'arbre d'entraînement en entrée (2) entraînée en entrée la roue de véhicule par le biais d'une roue dentée droite (3) entraînée en entrée et d'une roue dentée droite (5) entraînée en sortie de l'engrenage de roue dentée droite (4) et par le biais de l'engrenage planétaire (6), le capteur de vitesse de rotation (9, 11) saillant en partie hors du carter de démultiplicateur de vitesses (10) et le capteur de vitesse de rotation (9, 11) étant disposé soit dans le plan axial dans le prolongement de l'axe de rotation (13) de l'arbre d'entraînement en entrée (2) du moteur électrique d'entraînement en entrée (1), par rapport à la roue dentée droite (3) entraînée en entrée, sur le côté opposé au moteur électrique d'entraînement en entrée (1), dans la zone de la roue dentée droite (5) entraînée en sortie et détectant la vitesse de rotation de l'arbre d'entraînement en entrée (2), soit étant disposé dans le plan radial au niveau de la circonférence de la roue dentée droite (5) entraînée en sortie et détectant la vitesse de rotation de la roue dentée droite (5) entraînée en sortie, soit étant disposé dans le plan axial dans la zone de l'endentement de la roue dentée droite (5) entraînée en sortie et détectant la vitesse de rotation de la roue dentée droite (5).

2. Entraînement en entrée pour un véhicule mobile selon la revendication 1, **caractérisé en ce que** le capteur de vitesse de rotation (9) est disposé dans le plan axial dans le prolongement de l'axe de rotation de l'arbre d'entraînement en entrée, qu'il est un capteur de position sinus-cosinus (9) entrant en interaction avec le dipôle magnétique (8) relié à la roue dentée droite (3) entraînée en entrée au niveau de sa surface axiale opposée au moteur d'entraînement en entrée (1).

3. Entraînement en entrée pour un véhicule mobile selon la revendication 1, **caractérisé en ce que** la partie du capteur (9, 11) saillant du carter de démultiicateur de vitesses (10) est protégée au moins en direction de la surface de soulèvement de roue de véhicule par des renforts en fonte du carter de démultiplicateur de vitesses (10).

4. Entraînement en entrée pour un véhicule mobile selon la revendication 1, **caractérisé en ce que** la roue dentée droite (5) entraînée en sortie est reliée solidairement en rotation à une roue de capteur (12) disposée dans le plan coaxial par rapport à la roue dentée droite (5) entraînée en sortie et que le capteur de vitesse de rotation (11) est disposé perpendiculairement à la roue de capteur (12) et interagit ainsi avec cette roue de capteur (12), qu'il envoie des signaux de vitesse de rotation donnant la vitesse de rotation de la roue dentée droite (5) entraînée en sortie.

5. Entraînement en entrée pour un véhicule mobile selon la revendication 1, **caractérisé en ce que** le capteur de vitesse de rotation (11) interagissant avec la roue de capteur (12) est disposé parallèlement à l'axe de rotation (14) de la roue de capteur (12).
